# EUROPEAN PATENT APPLICATION

(11) **EP 1 133 145 A2**
(43) Date of publication of application: **12.09.2001**
(21) Application number: 01300090.6
(22) Date of filing: 05.01.2001
(51) Int. Cl.: H04N 1/00

(54) **Pocket fax**

(30) Priority: 19.01.2000 US 487508
(71) Applicant: Hewlett-Packard Company, A Delaware Corporation, Palo Alto, CA 94304 (US)
(72) Inventor: Dalton, Dan L., Greeley, CO 80634 (US); Dow, James C., Fort Collins, CO 80526 (US); Goris, Andrew C., Masonville, CO 80541 (US); Hansen, Barry K., Fort Collins, CO 80528 (US); Miksch, Eugene A., Loveland, CO 80537 (US); Moses, Mary E., Windsor, CO 80550 (US); Oliver, Thomas C., Windsor, CO 80550 (US); Henderson, Scott, Brooklyn, NY 11231 (US); Formosa, Daniel, Montvale, NJ 07645 (US); Stowell, Davin, New York, NY 10003 (US); Di Bitonto, Anthony, Brooklyn, NY 11201 (US)
(74) Representative: Jackson, Richard Eric

(57) **Abstract**

A pocket fax, comprising: a housing (10); an information capture module (12) disposed within the housing and adapted to capture information adjacent to the housing; a communications module (30) disposed within the housing for receiving data from the information capture module and translating the data to a format that can be communicated to an external device; an external communications interface (16) for the housing; and a modem (22) disposed within the housing for receiving data from the communications module (30) and communicating the data to the external communications interface (16).

## Description

### BACKGROUND OF THE INVENTION

### 1. Field of the Invention

The present invention relates generally to information capture devices, and more particularly to a portable information capture device that includes a built-in mechanism for creating an interface between the portable capture device and a variety of other devices.

### 2. Description of the Related Art

There is a need for a light-weight portable capture device such as a portable scanner to be able to conveniently communicate its captured information to another communication device.

### SUMMARY OF THE INVENTION

Briefly, the present invention comprises, in one embodiment, a pocket fax, including: a housing; an information capture module disposed within the housing and adapted to capture information adjacent to the housing; a communications module disposed within the housing for receiving data from the information capture module and translating the data to a format that can be communicated to an external device; an external communications interface for the housing; and a modem disposed within the housing for receiving data from the communications module and communicating the data to the external communications interface.

In a further aspect of the present invention, a keypad is provided to allow the user to control the device , and a display screen is provided for displaying status information.

In a yet further aspect of the present invention, the external interface is adapted to communicate with at least one of a printer, a telephone cable, and a computing resource.

In a yet further aspect of the present invention, the communications module translates data received from the information capture module having a first data protocol to a second data protocol for communication to the external interface.

In a yet further aspect of the present invention, the information capture module comprises a scanner, and the external interface includes a telephone line interface and a computing resource interface.

In a yet further aspect of the present invention, a user interface is provided to allow for a user to select one of the telephone line interface and the computing resource interface.

In a yet further aspect of the present invention, a user interface is provided for allowing a user to input control information, and a display screen is provided that is connected to at least one of the communications module and the information capture module for receiving and displaying information regarding the memory remaining for information capture in the information capture module.

In a yet further aspect of the present invention, a user interface is provided for allowing a user to input modem control information, and a display screen is provided for displaying at least one modem number.

### BRIEF DESCRIPTION OF THE DRAWINGS

Fig. 1 is a schematic block diagram of a preferred embodiment of the present invention.

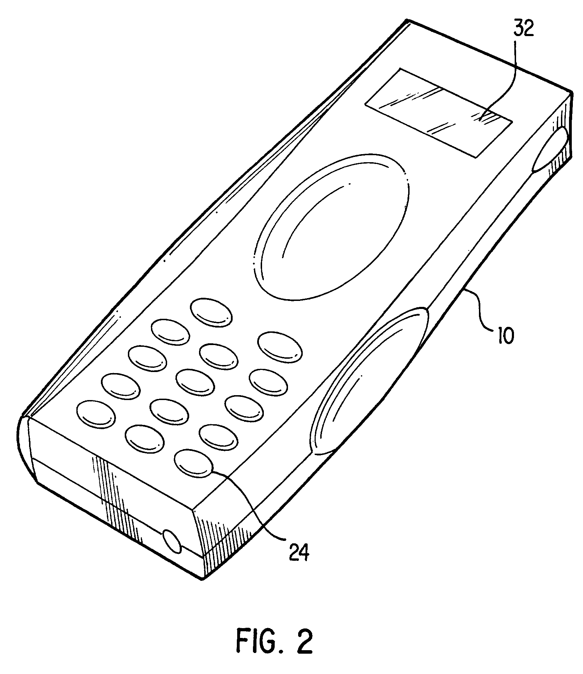

Fig. 2 is a schematic diagram of one preferred configuration for the present invention.

### DETAILED DESCRIPTION OF THE PREFERRED EMBODIMENT

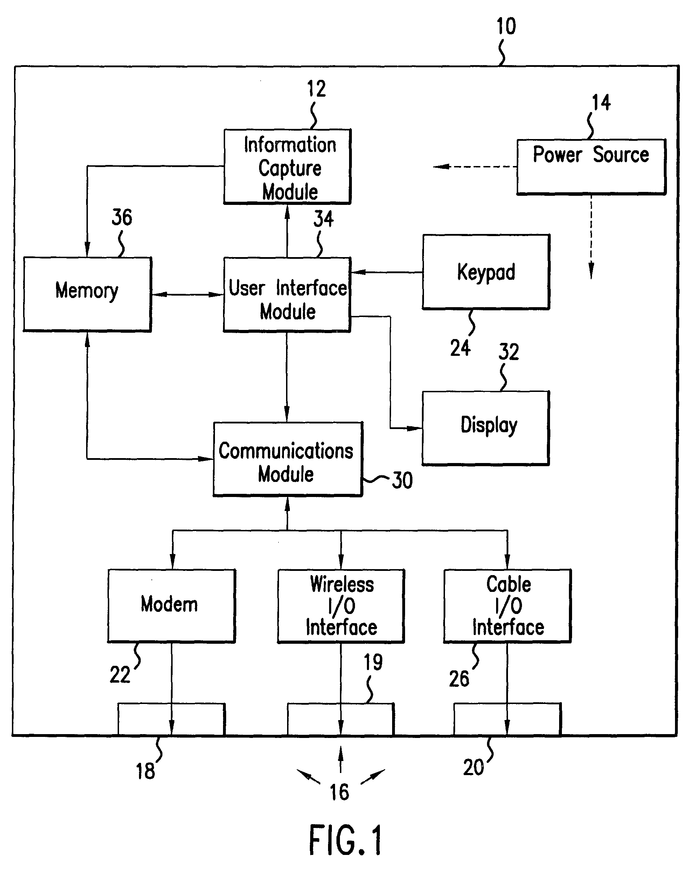

The present invention is directed to a portable information capture device that includes built-in fax capability. Referring to Fig. 1, there is shown a portable information capture device comprising a housing 10 containing therein a plurality of modules, including an information capture module 12.

Typical information capture modules might comprise a portable scanner such as the Hewlett Packard CapShare 920 portable e-copier. The CapShare 920 has a device size of 5.5 L by 4.1 H by 1.5 W (inches), a device weight with two batteries of 12.5 ounces, and is capable of capturing sizes from business cards to legal size documents or flip charts. Page storage for current devices comprise about 50 letter-size documents. Such devices include approximately 4 MB of memory. The CapShare 920 supports receiver devices such as IBM Compatible PCs, handheld PCs running Windows CE, Psion Series 5 handheld PCs, HP Laser Jet 5P/6P/2100 printers, Cannon BJC-80/BJC-50 printers, Citizen P60i printers, the Nokia Communicator, and a variety of other IR printers, communicators, and JetSend Direct Connect devices. The CapShare 920 includes software specifications to interface with IBM-Compatible PCs running Microsoft Windows 95, Windows 98, or NT 4.0, handheld PCs running Windows CE, and Psion Series 5 handheld PCs running EPOC32. It can also manipulate files directly with Microsoft Explorer as Adobe Acrobat Reader PDF files and TIFF files, and XIF to ScanSoft Pagis Pro 2.0. The Capshare 920 also includes IR send capability of 4 Mbps (IrDA-compliant infrared) (5-15 second/letter-size page). It has a serial send rate of 115 KBPS. The CapShare 920 is powered by two AA NiMH or NiCd rechargeable batteries. Note that in general it is desirable to reduce the size of the information capture module to a size that is easily pocketable in order to make it more convenient to carry around.

It should be noted that the present invention is not limited to use with an HP CapShare 920, but this device is cited as exemplary of a class of devices. In a preferred embodiment, the information capture would have a reduced size. By way of example but not by way of limitation, the information capture device could have a 127 mm contact image sensor, two AA batteries, and a 240x80 pixel (60x20 mm) LCD in a 128x50x23 mm housing. A variety of other devices may be utilized to implement the information capture module 12, including a digital camera.

The housing 10 should include a source of power 14, such as a battery pack to power the various modules in the housing. Alternatively or in addition, the housing 10 may contain an interface (not shown) for connecting to an external power source.

The housing 10 further includes an external interface 16 for connection to at least one external communication device. This external communication device may be a fax machine, an e-mail application, a printer, a PC device or any of a variety of other communication devices. In the most elementary embodiment of the present invention, this third interface 16 would comprise a single interface to one type of device. By way of example, this external interface 16 could comprise a telephone jack 18, i.e., an RJ-11 cable. A retractor could coil the RJ-11 cable inside the device. While this may be a convenient feature, it would also likely increase the size of the device substantially. Alternatively or in addition, the external interface 16 could comprise a wireless antenna or photosensor/LED transmitter 19. Alternatively or in addition, the external interface 16 could comprise a standard cable I/O jack 20 such as a USB or RS-232 jack.

In a preferred embodiment, a modem 22 and a keypad 24 for providing information for the modem 22 may be included within the housing 10. The modem 22 connects to the telephone jack 18 and may be implemented by any module that provides modem capability. The keypad 24 may be implemented by a standard number pad. The keypad 24 would include a standard set of numbers, and at least a "send" button. The modem 22 would be capable of communicating through the interface 18 with fax machines and e-mail applications.

As noted above, a wireless antenna or photosensor/LED I/O 19 and/or cable jack 20 may be included as part of the external interface 16. If a wireless I/O 19 is included, then a wireless I/O module 25 would be provided for connection to the wireless I/O 19. A variety of wireless protocols may be implemented by such a module. By way of example, a protocol called Bluetooth may be utilized that uses radio-frequency waves to allow PCs, cell phones, PDAs, and other devices to communicate with each other over short distances. Alternatively, an IR protocol could be utilized and an IR receive/transmit chip could be included. By way of example, a variety of IR receive/transmit chips are available to implement SIR and FIR protocols. It should be noted that if the present invention is to be implemented for IR communication, then an infrared transmit/receive diode or other appropriate IR receiver/transmitter may be utilized.

To facilitate a cable connection, a cable I/O module 26 would be provided within the housing 10 for connecting to the cable jack 20. By way of example, if this cable I/O module 26 were for serial operation, then it could be implemented by a standard RS 232 interface chip such as the ADM101E from Analog Devices, Norwood, Massachusetts.

To facilitate data communication of the information capture module 12 with the modem 22, the wireless I/O interface 25 and the cable I/O interface 26, a communications module 30 is provided. The communications module 30 is connected, in a preferred embodiment, to the modem 22, to the wireless I/O interface 25 (when included), and to the cable I/O interface 26 (when included). In a preferred embodiment, the communications module 30 manages all aspects of a selected I/O protocol which may include data packet protocols and error correction procedures required for the modem 22, the wireless I/O interface 25 (when included), or cable I/O interface 26 (when included). While the communications module could have its own dedicated processor and memory, these items would typically be shared by every module in the device. If the external interface 16 includes more than one interface, then one of the interfaces 18, 19 or 20 in the external interface 16 would be selected manually or automatically to communicate with the information capture module 12. In a preferred embodiment, the modem would be used if the user enters or selects a destination telephone number by the keypad 24. If no destination telephone number is selected, then the communications module 30 would select the cable I/O interface module 26 if it is connected to another device. If neither the modem 22 nor the cable I/O interface module 26 is selected, then the wireless I/O interface would be selected.

The device also includes in the housing 10 a display 32, a user interface module 34 and a memory 36. The user interface module 32 includes the functional intelligence to manage the previously mentioned keypad 24 and the display 32, and to determine what outputs will occur, and is typically implemented by firmware. The display 32 is implemented in a preferred embodiment by an LCD display. The display 32 is connected to the user interface module 34, and may be used to display one or more of information such as the memory remaining, error conditions in any of the modules, a low battery warning, numbers that may be dialed at the keypad 24, and/or a number that has been keyed onto the keypad 24, send status, a visual representation of the content of captured pages, etc. The memory 36 is preferably a non-volatile memory for storing captured information from the information capture module 12, for storing user input from the keypad 24, and for storing firmware.

Accordingly, it can be seen that the user interface module 30 in combination with keypad 24 may be used to allow a user to select one of a telephone line interface 18, or a computing resource interface 20 or other convenient interface. Thus, a user can scan or otherwise copy a document or other information using the present invention and can immediately send that information to a second communication device. The device of the present invention can communicate in its preferred embodiment with either a fax machine, an e-mail application, a PDA, a printer, a PC, or a variety of other convenient communication devices via the external interface 16.

The housing 10 can be constructed of a standard material used for cell phones and other portable appliances. Typically, this material would be a fire retardant plastic or ABS. However, the present invention is not limited to any particular material. It should be noted that the internal wiring between modules and other blocks within the housing may be accomplished by means of a printed circuit board, or via interconnect cable. The communication between the modules and other block within the housing 10 could also talk to each other by means of a serial or parallel databus.

The foregoing description of a preferred embodiment of the invention has been presented for purposes of illustration and description. It is not intended to be exhaustive or to limit the invention to the precise form disclosed, and modifications and variations are possible in light of the above teachings or may be acquired from practice of the invention. The embodiment was chosen and described in order to explain the principles of the invention and its practical application to enable one skilled in the art to utilize the invention in various embodiments and with various modifications as are suited to the particular use contemplated. It is intended that the scope of the invention be defined by the claims appended hereto and their equivalents.

## Claims

1. A pocket fax, comprising:
a housing (10);
an information capture module (12) disposed within said housing and adapted to capture information adjacent to said housing;
a communications module (30) disposed within said housing for receiving data from said information capture module and translating said data to a format that can be communicated to an external device;
an external communications interface for said housing (16); and
a modem (22) disposed within said housing for receiving data from said communications module and communicating said data to said external communications interface.

2. A device as defined in claim 1, further comprising a keypad (24) to allow users to enter or select information required by said modem.

3. A device as defined in claim 1, further comprising a user interface (34) including a display screen (32) for displaying information from said information capture module.

4. A device as defined in claim 1, wherein said external interface (34, 16, 18) is adapted to communicate with a telephone cable .

5. A device as defined in claim 1, wherein said external interface (34, 16, 20) is adapted to communicate with a computing resource.

6. A device as defined in claim 1, wherein said external interface (34) is adapted to communicate with a printer.

7. A device as defined in claim 1, wherein said communications module (30) translates data received from said information capture module to a data protocol for communication to said external interface.

8. A device as defined in claim 1, wherein said information capture module (12) comprises a scanner;
wherein said external interface includes a telephone line interface (18) and a computing resource interface (20).

9. A device as defined in claim 8, further comprising a user interface (34) to allow for a user to select one of said telephone line interface (18) and said computing resource interface (20).

10. A device as defined in claim 1, further comprising a user interface (34) for allowing a user to input control information (24), and a display screen (32) connected to the user interface module for displaying information of one of memory remaining for information capture, graphical representations of captured pages, status information, errors and warnings.

11. A device as defined in claim 1, further comprising a user interface (34, 24) for allowing a user to input modem control information, and a display screen (32) for displaying at least one modem number sequence.

12. A device as defined in claim 11, wherein said external interface is adapted to communicate with a printer.
